# EUROPEAN PATENT APPLICATION

(11) **EP 1 152 334 A2**
(43) Date of publication of application: **07.11.2001**
(21) Application number: 00118679.0
(22) Date of filing: 29.08.2000
(51) Int. Cl.: G06F 9/445

(54) **Method and system for providing application services**

(30) Priority: 19.04.2000 JP 2000117440
(71) Applicant: Hitachi, Ltd., Chiyoda-ku, Tokyo 101-8010 (JP)
(72) Inventor: Shitomi, Hidehisa, Hitachi, Ltd., Intell. Property, Chiyoda-ku, Tokyo 100-8220 (JP); Takahashi, Naoki, Hitachi, Ltd., Intell. Property, Chiyoda-ku, Tokyo 100-8220 (JP); Kono, Toshiaki, Hitachi, Ltd., Intell. Property, Chiyoda-ku, Tokyo 100-8220 (JP); Harada, Shunichi, Hitachi, Ltd., Intell. Property, Chiyoda-ku, Tokyo 100-8220 (JP); Okumura, Tamotsu, Hitachi, Ltd., Intell. Property, Chiyoda-ku, Tokyo 100-8220 (JP)
(74) Representative: Strehl Schübel-Hopf & Partner

(57) **Abstract**

An application service providing method of providing a user with application services, the method including the steps of: selecting (103) applications or application providers and their applications satisfying user requirements from a plurality of applications provided by a application provider or providers; and providing (101) application services by performing data format conversion, communication protocol conversion, or work flow management between the selected applications (102). Techniques are provided being capable of efficiently providing services of applications requested by a user.

## Description

### BACKGROUND OF THE INVENTION

### Field of the Invention

The present invention relates to an application service providing system in which a user can access, when necessary, via a network an application provided in a server machine. More particularly, the invention relates to techniques suitable for application to an application service providing system which selects applications satisfying user requirements from a plurality of applications provided by a provider or providers and supplies the user with the selected applications.

### Description of the Related Art

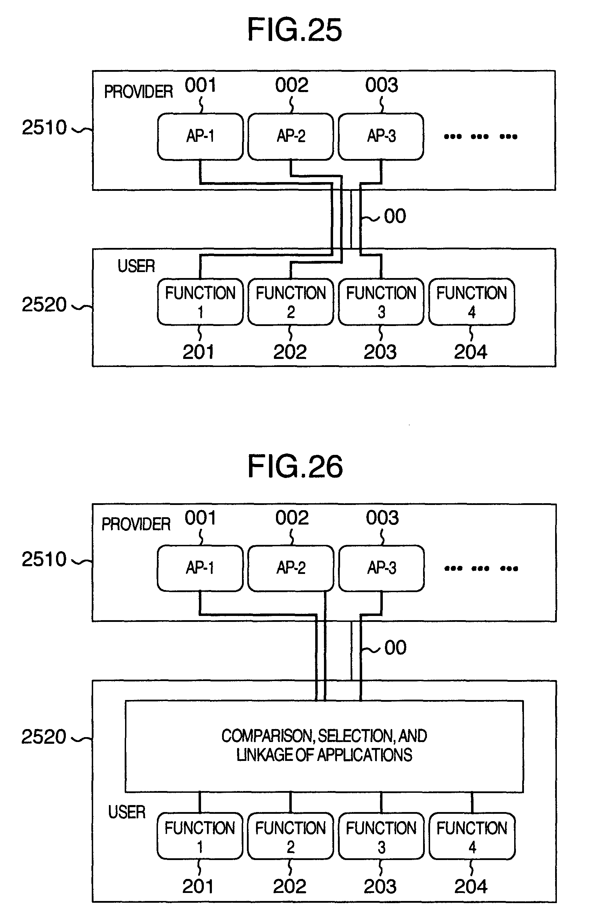

Fig. 25 is a diagram showing the structure of a conventional application service providing system. In this system shown in Fig. 25, a provider runs and administers a provider side apparatus 2510 at a computer center of the provider or another company. The provider side apparatus 2510 provides a user with applications 001 to 003 contracted with the provider. The user can access the applications 001 to 003 from a user side apparatus 2520 via a network 00.

With this system, a user is not required to have own server machine and to run and administer an application system. A user can rely on the provider to change an OS or application to a new version or to perform other works. Applications, particularly business applications, can therefore be installed at an early stage, and initial cost of introducing these resources and maintenance cost can be reduced.

Fig. 26 is a diagram illustrating application linkage in a conventional application service providing system. As shown in Fig. 26, before a user uses a plurality of applications, the user checks and compares the function, charge, use response and the like of each application and selects applications satisfying the user requirements. The user then contracts with an application service provider (ASP) for each application. The user realizes by itself linkage between a plurality of contracted applications.

### SUMMARY OF THE INVENTION

With the above-described conventional techniques, an application provided by a provider includes an office application, a mail application, a group ware application, a business application, or a particular function or the like of the business application. Such an application unit is independently provided by the provider.

If a user wishes to use a plurality of application units of such services, the user is required to check the feature of each application unit, to select desired units, to contract with ASP for each selected unit, and to realize by itself linkage between contracted application units. However, the requirements such as a function, charge, and use response of each application to be provided are different in many cases between providers and applications. It is therefore difficult for a user to check the requirements and select optimum applications satisfying the requirements. In order to realize linkage between a plurality of contracted applications, a user is required to be familiar with the function of each application and linkage techniques. It is difficult for a general user to acquire such knowledge and realize application linkage.

It is an object of the present invention to solve the above-described problems and provide techniques capable of efficiently providing application services requested by a user.

It is another object of the invention to provide techniques capable of providing application services ensuring a service level requested by a user.

It is still another object of the invention to provide techniques capable of reducing a burden on a user requesting services for a plurality of applications.

According to the invention, an application service providing system provides a user with application services, by selecting applications or application providers and their applications satisfying user requirements from a plurality of applications provided by an application provider or providers, and by linking a plurality of applications.

In the application service providing system of the invention, user requirements such as application function requirements indicating the function of each application requested by the user, charge requirements indicating a user limit charge, and response requirements indicating a response of an application requested by the user, are first entered and then applications or application providers and their applications satisfying user requirements are selected from a plurality of applications provided by an application provider or providers.

If a plurality of applications are to be executed. application services are provided by performing data format conversion, communication protocol conversion, or workflow management, respectively for the selected applications, and by linking the plurality of applications.

In the application service providing system of this invention, an application not satisfying the user requirements is exchanged with another application provided by its own provider or other application providers. For example, this application exchange is performed: when the application cannot satisfy the application function requirements because of version-up of application, a change in an application vendor or provider partnership, or other reasons; when the response requirements of a server running the application cannot be satisfied; or when there arises a possibility that a final charge amount anticipated from an intermediate total charge cannot satisfy the charge requirements designated by the user.

In the application service providing system of this invention, a counter of services for a plurality of applications is concentrated. Namely, log-in and charge of a user requesting services for a plurality of applications are concentrated and managed, and display windows for applications are integrated.

As above, services for applications are provided by selecting applications or application providers and their applications satisfying user requirements from a plurality of applications provided by an application provider or providers. Accordingly, services for applications requested by a user can be efficiently provided.

### BRIEF DESCRIPTION OF THE DRAWINGS

Fig. 1 is a diagram showing the structure of an application service providing system according to a first embodiment of the invention.
Fig. 2 is a flow chart illustrating the operation procedure from when applications are requested to when actual contracts are made, according to the first embodiment.
Fig. 3 shows examples of display windows used when applications are selected, according to the first embodiment.
Fig. 4 is a diagram showing examples of display windows used when a user enters requirement information, according to the first embodiment.
Fig. 5 is a diagram showing comparison between application functions according to the first embodiment.
Fig. 6 shows examples of display windows used when candidate lists are displayed, according to the first embodiment.
Fig. 7 is a diagram showing the structure of an application service providing system according to a second embodiment of the invention.
Fig. 8 is a flow chart illustrating the operation procedure from when applications are requested to when actual contracts are made, according to the second embodiment shown in Fig. 7, which procedure is also used by third to fifth embodiments of this invention to be described later and shown in Figs. 9 to 11.
Fig. 9 is a diagram showing the structure of an application service providing system according to a third embodiment of the invention.
Fig. 10 is a diagram showing the structure of an application service providing system according to a fourth embodiment of the invention.
Fig. 11 is a diagram showing the structure of an application service providing system according to a fifth embodiment of the invention.
Fig. 12 is a diagram showing the structure of an application service providing system having an application exchanging function according to a sixth embodiment of the invention.
Fig. 13 is a flow chart illustrating the procedure of an application exchanging process to be executed by an application service providing system having an intermediary provider, according to the sixth embodiment.
Fig. 14 is a flow chart illustrating the procedure of an application exchanging process to be executed by an application service providing system without an intermediary provider, according to the sixth embodiment.
Fig. 15 is a graph illustrating an example of an application exchange in accordance with the charge information, according to the sixth embodiment.
Fig. 16 shows examples of display windows for entering user requirement information, according to the sixth embodiment.
Fig. 17 shows examples of display windows used when candidate lists are displayed, according to the sixth embodiment.
Fig. 18 is a flow chart illustrating the procedure of an application exchanging process to be executed in accordance with the response requirements, according to the sixth embodiment.
Fig. 19 is a flow chart illustrating the procedure of an application exchanging process to be executed in accordance with the application function requirements, according to the sixth embodiment.
Fig. 20 is a flow chart illustrating the procedure of an application exchanging process to be executed in accordance with the charge requirements, according to the sixth embodiment.
Fig. 21 is a diagram showing the structure of an application service providing system having a counter concentrating function according to a seventh embodiment of the invention.
Fig. 22 is a diagram illustrating a use example of a log-in information table which manages log-in information of each user stored in a log-in information database 112, according to the seventh embodiment.
Fig. 23 is a diagram illustrating a use example of a charge information table which manages charge information of each user stored in a charge information database 105, according to the seventh embodiment.
Fig. 24 is a diagram illustrating a use example of a tag code list which manages dependency between display items of applications, according to the seventh embodiment.
Fig. 25 is a diagram showing the structure of a conventional application service providing system.
Fig. 26 is a diagram illustrating application linkage in a conventional application service providing system.

### DETAILED DESCRIPTION OF THE EMBODIMENTS

Embodiments of an application service providing system will be described which system selects applications or application providers and their applications satisfying user requirements from a plurality of applications provided by a single application provider or providers and supplies the user with the selected ones.

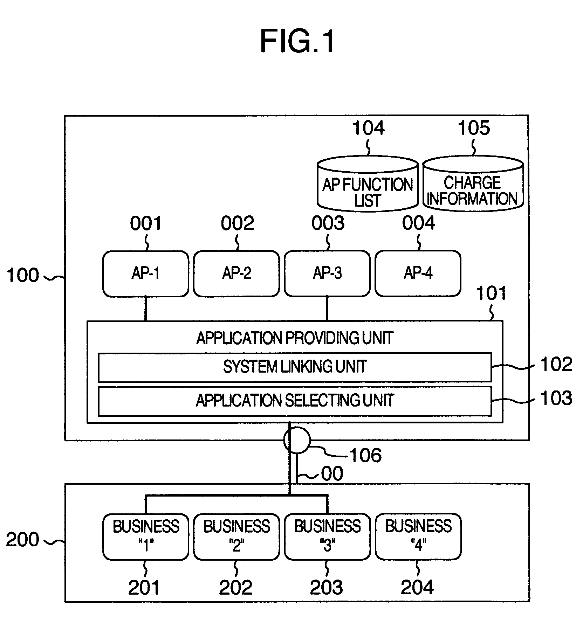

Fig. 1 is a diagram showing the structure of an application service providing system according to a first embodiment of the invention. As shown in Fig. 1, a provider side apparatus 100 of this embodiment has an application providing unit 101, a system linking unit 102, and an application selecting unit 103.

The application providing unit 101 selects a plurality of applications, converts data formats, converts communication protocols, or controls work flow management. The system linking unit 102 converts data formats, converts communication protocols, or controls work flow management, respectively for selected applications, to provide application services. The application selecting unit 103 selects applications satisfying user requirements from a plurality of applications.

Programs for realizing the functions of the application providing unit 101, system linking unit 102 and application selecting unit 103 of the provider side apparatus 100 are stored in a hard disk or the like of the provider side apparatus 100, and loaded on a memory to execute the programs. A storage medium for storing the programs may be other storage media different from a hard disk.

The provider side apparatus 100 shown in Fig. 1 has a plurality of applications AP-1 to AP-4, the application providing unit 101, an application function list database 104 storing the functions of the applications, a charge information database 105 for storing charge information of each user, and a counter unit 106 for collectively administering input/output of information to and from a user.

The application providing unit 101 has the system linking unit 102 for systematic linkage between applications and the application selecting unit 103 for selecting a plurality of applications. The system linking unit 102 converts data formats, converts communication protocols, controls business process management such as work flow management, respectively for applications to be linked. The application selecting unit 103 compares application function requirements input by a user via the counter unit 106 with the data stored in the application function list database 104 and selects applications having the functions satisfying the user requirements. The application selecting unit 103 also compares the charge method and charge amount of each application stored in the charge information database 105 with the charge requirements input by the user via the counter unit 106, and selects applications satisfying the charge requirements.

A user side apparatus 200 controls businesses "1" to "4" by using business applications. A business is used as the unit of a service request. The business applications corresponding to the businesses "1" to "4" are AP-1 to AP-4, respectively.

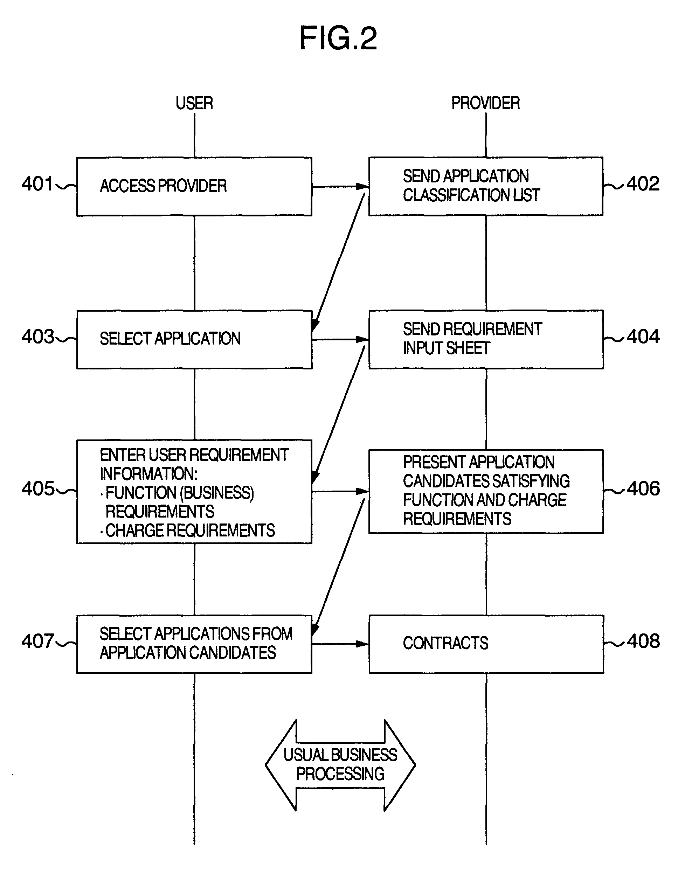

Fig. 2 is a flow chart illustrating the operation procedure from when applications are requested to when actual contracts are made, according to the first embodiment. The flow chart of Fig. 2 illustrates the operation procedure from when a user requests applications to when services are provided by the application service providing system shown in Fig. 1.

It is assumed that the user requests the provider to provide applications necessary for the businesses "1" and "3" and that the user uses own applications necessary for the businesses "2" and "4". A request for the applications necessary for the businesses "1" and "3" by the user starts when the counter unit 106 of the provider side apparatus 100 is accessed (401).

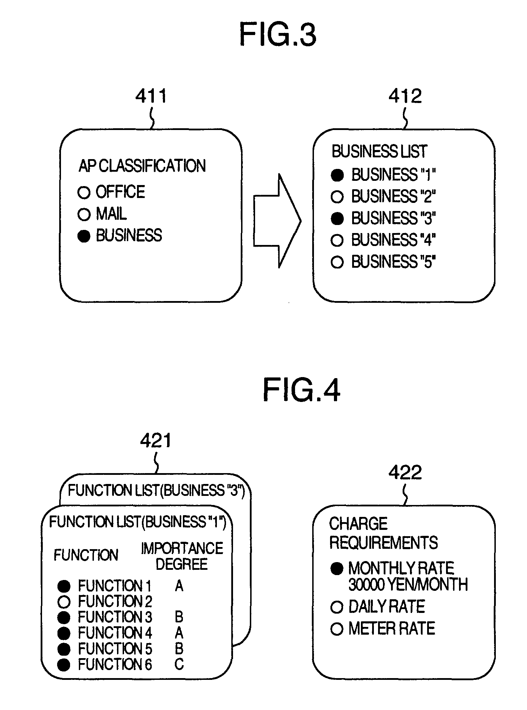

Fig. 3 shows examples of display windows used when applications are selected, according to the first embodiment. It is conceivable that the provider side apparatus 100 accessed is requested to provide a wide range of applications from office applications to business applications. Therefore, the application selecting unit 103 of the application providing unit 101 does not display one application name after another, but as shown in Fig. 3 supplies the user with a classified and hierarchical list, e.g., supplies first a rough application classification 411 and then a detailed classification for each application type such as a business classification 412 (402).

When the application classification 411 is supplied, the user selects a desired application type, in this example, the business, and then the business classification 412 is displayed (403). In this example, the user selects the businesses "1" and "3" as shown in Fig. 3.

After the user selects the businesses "1" and "3", the application selecting unit 103 of the intermediary provider reads a function list of each selected business from the application function list database 104 storing the functions of the applications possessed by the intermediary provider side apparatus. In order to determine specific applications, the application selecting unit 103 supplies the read lists to the user to make the user enter the necessary business functions. At the same time, the user is asked to enter charge requirements (404).

Fig. 4 is a diagram showing examples of display windows used when a user enters requirement information, according to the first embodiment. The user selects necessary business functions from a business function list 421 supplied by the provider for each business as shown in Fig. 4, and enters charge requirements 422 (405). When the function is selected, not only a level such as "necessary" and "unnecessary" but also a more detailed level such as "essential", "desired", "not essential" depending upon the importance degree of each function may be entered. In this example, levels A, B and C are used having the higher importance in this order.

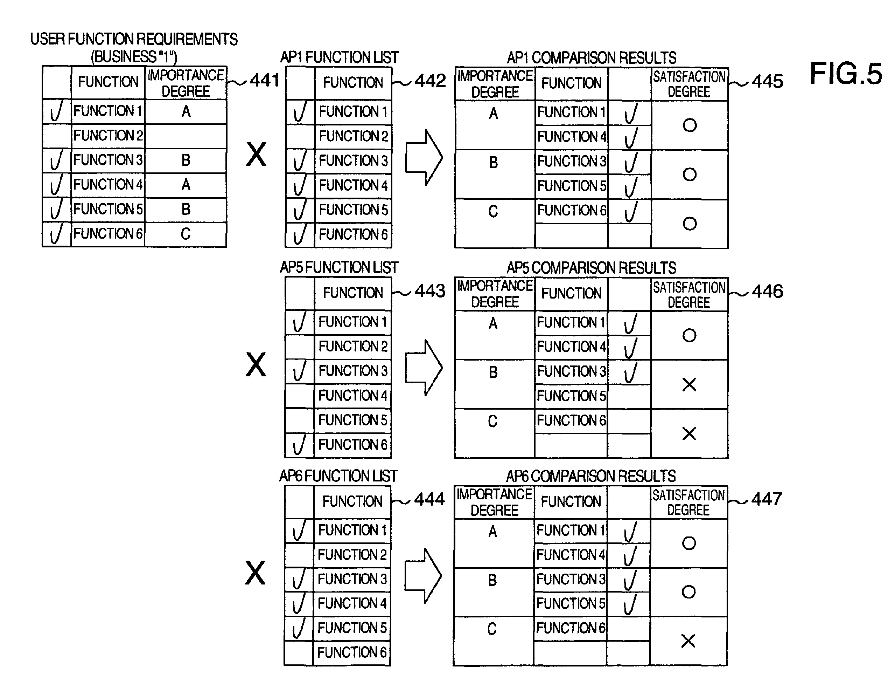

Fig. 5 is a diagram showing comparison between application functions according to the first embodiment. As shown in Fig. 5, the application selecting unit 103 of the provider side apparatus 100 compares the user function requirements 441 of each business entered by the user with business function lists 442 to 444 each storing the business functions of each application. If the user entered the importance degree of each function, it is judged as shown in Fig. 4 as comparison results 445 to 447 whether each function at each importance degree is satisfied or not. In this example, AP-1 satisfies the functions of the business "1" at all the importance degrees A, B and C, AP-5 satisfies the functions only at the importance degree A, and AP-6 satisfies the functions at the importance degrees A and B.

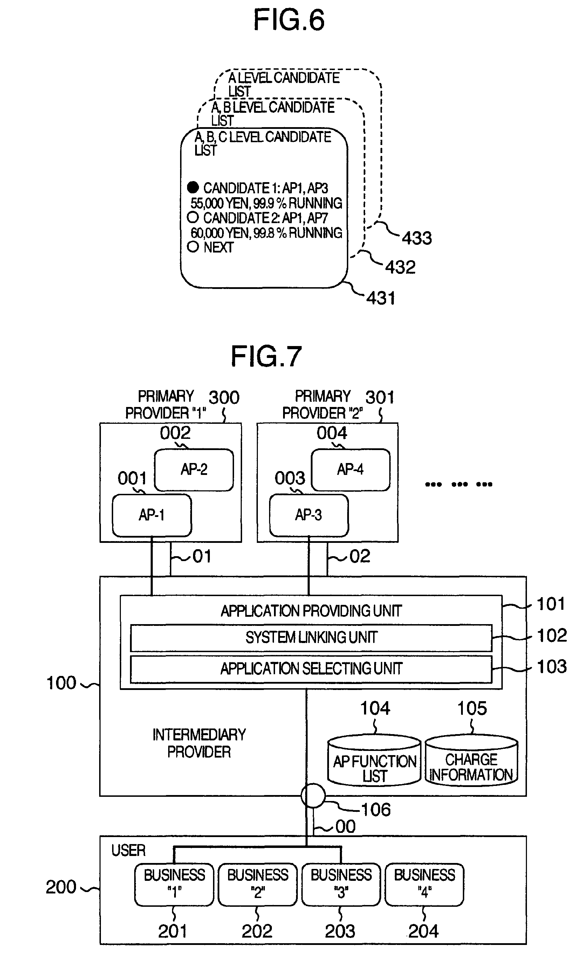

Fig. 6 shows examples of display windows used when candidate lists are displayed, according to the first embodiment. If the user did not enter the importance degrees, the application selecting unit 103 supplies the user with application candidates satisfying the charge requirements among application candidates satisfying all the functions requested by the user. If the user entered the importance degrees, the application selecting unit 103 supplies the user with application candidates 431 to 433 satisfying the charge requirements among application candidates satisfying the functions at all the importance degrees A, B and C, satisfying the functions only at the importance degrees A and B, and satisfying the functions only at the importance degree A, in accordance with the satisfaction degrees of the function at each importance degree (406).

Instead of presenting the user with application candidates, a satisfaction degree of each function may be represented by a numerical value. In this case, if the user did not enter the importance degrees, only an application having the highest satisfaction degree of the function requested by the user is presented. If the user entered the importance degrees, only the application having the highest satisfaction degree of the function at the importance level A is automatically presented.

When application candidates are presented to the user, additional information on the server which runs each application, such as a running factor, may also be presented. Furthermore, as a criterion index for linkage facility between applications, information may be presented as to whether the application providing unit 101 has adapters to applications to be linked.

The user selects an optimum application candidate from the application candidates presented by the provider side apparatus and shown in Fig. 6 (407). After the user selects the optimum application candidate, the application selecting unit 103 of the provider side apparatus 100 contracts with the user, and activates the system linking unit 102 to realize systematic linkage between applications and start providing services (408).

With the above-described configuration, the application service providing system is realized which allows a user to select a plurality of applications and realize systematic linkage between applications.

Fig. 7 is a diagram showing the structure of an application service providing system according to a second embodiment of the invention. This system shown in Fig. 7 has providers (primary provider) having applications AP-1 to AP-4 such as shown in Fig. 1 and an intermediary provider having an application providing unit 101, an application function list database 104, a charge information database 105 storing charge information of each user, and a counter unit 106 for interface with users.

The primary provider "1" 300 provides applications AP-1 and AP-2 and the primary provider "2" 301 provides applications AP-3 and AP-4. By using the application providing unit 101, application function list database 104 and charge information database 105, an intermediary provider side apparatus 100 selects applications provided by the primary providers and realizes systematic linkage.

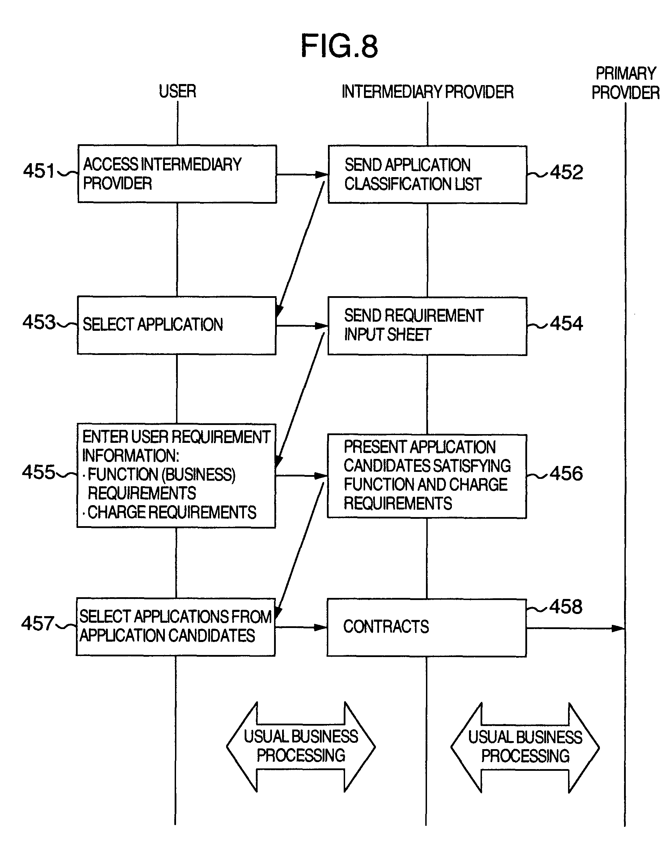

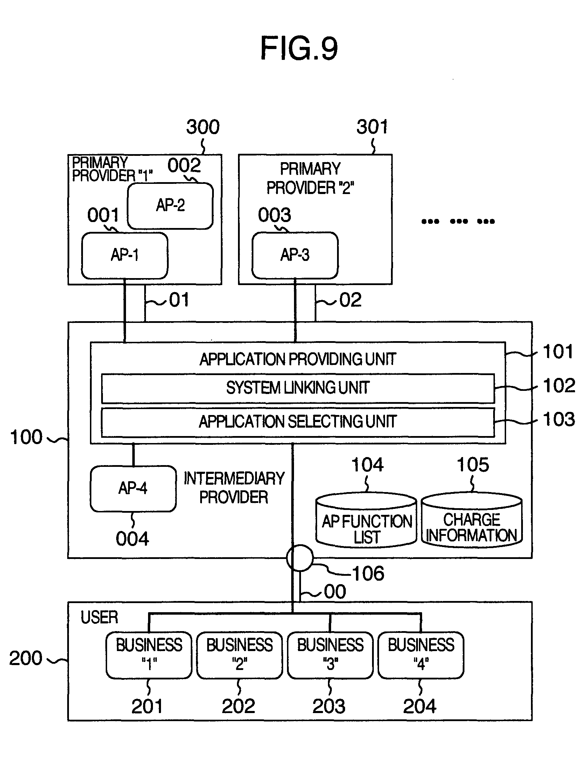

Fig. 8 is a flow chart illustrating the operation procedure from when applications are requested to when actual contracts are made, according to the second embodiment shown in Fig. 7, which procedure is also used by third to fifth embodiments of this invention to be described later and shown in Figs. 9 to 11. The flow chart of Fig. 8 illustrates the operation procedure from when a user requests applications to when services are provided by the application service providing system shown in Fig. 7.

It is assumed that the user requests the provider to provide applications necessary for the businesses "1" and "3" and that the user uses own applications necessary for the businesses "2" and "4". A request for the applications necessary for the businesses "1" and "3" by the user starts when the counter unit 106 of the intermediary provider side apparatus 100 is accessed (451).

The application selecting unit 103 of the intermediary provider side apparatus 100 does not display one application name after another of various types of applications provided by the primary provider, but as shown in Fig. 3 supplies the user with a classified and hierarchical list, e.g., supplies first the rough application classification 411 and then the detailed classification for each application type such as the business classification 412 (452).

When the application classification 411 is supplied, the user selects a desired application type, in this example, the business, and then the business classification 412 is displayed (453). In this example, the user selects the businesses "1" and "3" as shown in Fig. 3.

After the user selects the businesses "1" and "3", the application selecting unit 103 of the intermediary provider reads the function list of each selected business from the application function list database 104 storing the functions of the applications possessed by the intermediary provider. In order to determine specific applications, the application selecting unit 103 supplies the read lists to the user to make the user enter the necessary business functions. At the same time, the user is asked to enter charge requirements (454).

The user selects necessary business functions from the business function list 421 supplied by the provider for each business as shown in Fig. 4, and enters charge requirements 422 (455). When the function is selected, not only the level such as "necessary" and "unnecessary" but also the more detailed level such as "essential", "desired", "not essential" depending upon the importance degree of each function may be entered. In this example, levels A, B and C are used having the higher importance in this order.

As shown in Fig. 5, the application selecting unit 103 of the intermediary provider compares the user function requirements 441 of each business entered by the user with the business function lists 442 to 444 each storing the business functions of each application. If the user entered the importance degree of each function, it is judged as shown in Fig. 4 as comparison results 445 to 447 whether each function at each importance degree is satisfied or not. In this example, AP-1 satisfies the functions of the business "1" at all the importance degrees A, B and C, AP-5 satisfies the functions only at the importance degree A, and AP-6 satisfies the functions at the importance degrees A and B.

If the user did not enter the importance degrees, the application selecting unit 103 of the intermediate provider supplies the user with application candidates satisfying the charge requirements among application candidates satisfying all the functions requested by the user. If the user entered the importance degrees, the application selecting unit 103 supplies the user with the application candidates 431 to 433 satisfying the charge requirements among application candidates satisfying the functions at all the importance degrees A, B and C, satisfying the functions only at the importance degrees A and B, and satisfying the functions only at the importance degree A (456). Instead of presenting the user with application candidates, the satisfaction degree of each function may be represented by a numerical value. In this case, if the user did not enter the importance degrees, only an application having the highest satisfaction degree of the function requested by the user is presented. If the user entered the importance degrees, only the application having the highest satisfaction degree of the function at the importance level A is automatically presented.

When application candidates are presented to the user, additional information on the server which runs the application, such as a running factor, may also be presented. Furthermore, as a criterion index for linkage facility between applications, information may be presented as to whether the application providing unit 101 has adapters to applications to be linked.

The user selects an optimum application candidate from the application candidates or application providers and their application candidates presented by the intermediary provider as shown in Fig. 6 (457).

After the user selects the optimum application candidate, the application selecting unit 103 of the intermediary contracts with the user and primary providers, and activates the system linking unit 102 of the application providing unit 101 to realize systematic linkage between applications and start providing services (458).

With the above-described configuration, the application service providing system is realized which allows a user to select a plurality of applications provided by an application provider or providers via the intermediary provider not possessing applications, and to realize systematic linkage between applications.

Fig. 9 is a diagram showing the structure of an application service providing system according to a third embodiment of the invention. In this system shown in Fig. 9, the intermediary provider shown in Fig. 7 also has an application and provides it. A primary provider "1" 300 provides applications AP-1 and AP-2, a primary provider 2 301 provides an application AP-3, and a provider side apparatus 100 of the intermediary provider provides an application AP-4. At the same time, the provider side apparatus 100 selects applications provided by the apparatus itself and primary providers and realizes systematic linkage, by using the application providing unit 101, application function list database 104 and charge information database 105. It is assumed that a user side apparatus 200 requests the intermediary provider to provide applications necessary for the businesses "1", "3" and "4" and that the user side apparatus 200 uses own application necessary for the business "2".

The operation procedure from when a user requests the intermediary provider to provide applications to when services are provided by the application service providing system, is similar to the embodiments described above and is illustrated in the flow chart of Fig. 8.

With the above-described configuration, the application service providing system is realized which allows a user to select a plurality of applications provided by the intermediary provider and a primary provider or providers and to realize systematic linkage between applications.

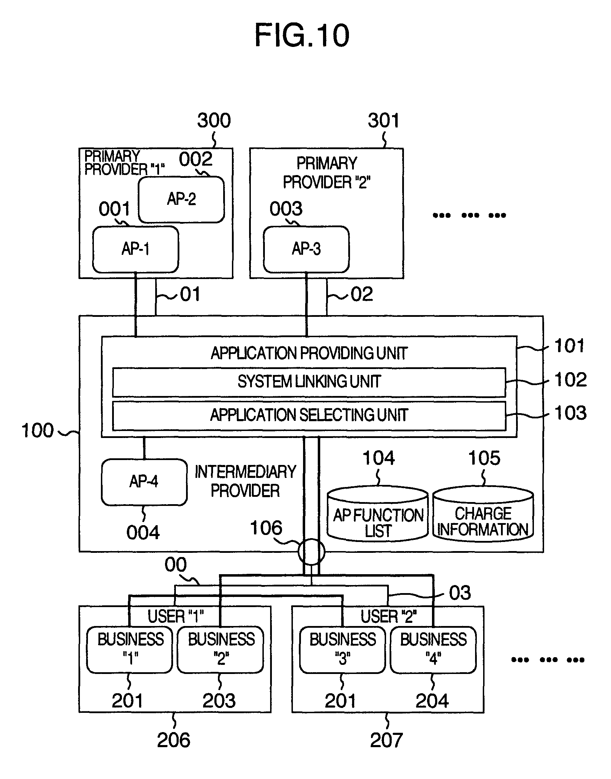

Fig. 10 is a diagram showing the structure of an application service providing system according to a fourth embodiment of the invention. In this system shown in Fig. 10, as different from the system shown in Fig. 9, the same application or different cooperative applications are provided to a plurality of users. A primary provider "1" 300 provides applications AP-1 and AP-2, a primary provider "2" 301 provides an application AP-3, and an intermediary provider side apparatus 100 provides an application AP-4. At the same time, the intermediary provider side apparatus 100 selects applications provided by the apparatus itself and primary providers and realizes systematic linkage, by using the application providing unit 101, application function list database 104 and charge information database 105.

It is assumed that a user "1" side apparatus 206 requests the intermediary provider to provide applications necessary for the businesses "1" and "3", and that a user "2" side apparatus 207 requests the intermediary provider to provide applications necessary for the businesses "1" and "4". The users "1" and "2" share the same application AP-1 necessary for the business "1". This business "1" corresponds to a business such as consolidated settlement of accounts to be performed by different companies by using the same application. The users "1" and "2" perform the businesses "3" and "4" by linking the applications AP-3 and AP-4 necessary for the businesses "3" and "4". These businesses "3" and "4" correspond to supply chain businesses, for example, the user "1" is a component maker and the user "2" is a company which assembles components and sales assembled products.

The operation procedure from when a user requests the intermediary provider to provide applications to when services are provided by the application service providing system, is similar to the embodiments described above and is illustrated in the flow chart of Fig. 8.

With the above-described configuration, the application service providing system is realized which allows a plurality of users to select a plurality of applications provided by the intermediary provider and a primary provider or providers and to realize systematic linkage between applications.

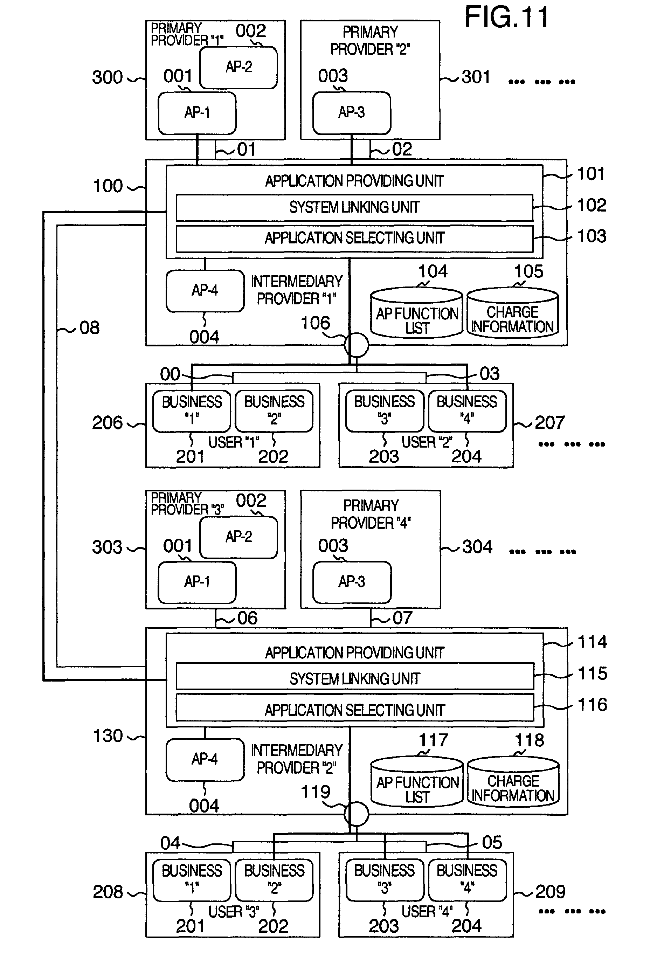

Fig. 11 is a diagram showing the structure of an application service providing system according to a fifth embodiment of the invention. In this system shown in Fig. 11, intermediary providers each having the same structure as that shown in Fig. 10 are linked together.

An application providing unit 101 of an intermediate provider "1" 100 selects a plurality of applications provided by an application provider or providers, converts data formats, converts communication protocols, or controls work flow management. A system linking unit 102 converts data formats, converts communication protocols, or controls work flow management, respectively for the applications selected by the intermediary provider "1" 100, to thereafter provide application services. An application selecting unit 103 of the intermediate provider "1" 100 selects applications or application providers and their applications satisfying user requirements from a plurality of applications provided by an application provider or providers.

An application providing unit 114 of an intermediate provider "2" 130 selects a plurality of applications provided by an application provider or providers, converts data formats, converts communication protocols, or controls work flow management. A system linking unit 115 converts data formats, converts communication protocols, or controls work flow management, respectively for the applications selected by the intermediary provider "2" 130, to thereafter provide application services. An application selecting unit 116 of the intermediate provider "2" 130 selects applications or application providers and their applications satisfying user requirements from a plurality of applications provided by an application provider of providers.

Programs for realizing the functions of the application providing unit 101, system linking unit 102 and application selecting unit 103 of the provider side apparatus 100 are stored in a hard disk or the like of the provider side apparatus 100, and loaded on a memory to execute the programs. A storage medium for storing the programs may be other storage media different from a hard disk.

Programs for realizing the functions of the application providing unit 114, system linking unit 115 and application selecting unit 116 of the provider side apparatus 130 are stored in a hard disk or the like of the provider side apparatus 130, and loaded on a memory to execute the programs. A storage medium for storing the programs may be other storage media different from a hard disk.

In this system shown in Fig. 11, a primary provider "1" 300 of the intermediary provider "1" provides applications AP-1 and AP-2, a primary provider "2" 301 provides application AP-3, and the intermediary provider "1" side apparatus 100 provides an application AP-4. At the same time, the intermediary provider "1" side apparatus 100 selects applications provided by the apparatus itself and primary providers and realizes systematic linkage, by using the application providing unit 101, application function list database 104 and charge information database 105.

A primary provider "3" 303 of the intermediary provider "2" provides applications AP-1 and AP-2, a primary provider "4" 304 provides application AP-3, and the intermediary provider "2" side apparatus 130 provides an application AP-4. At the same time, the intermediary provider "2" side apparatus 130 selects applications provided by the apparatus itself and primary providers and realizes systematic linkage, by using the application providing unit 114, application function list database 117 and charge information database 118. The application providing unit 101 of the intermediary provider "1" and the application providing unit 114 of the intermediary provider "2" can operate in a linked manner.

The user "1" receives the application necessary for the business "1" from the corresponding provider. The user "2" receives the application necessary for the business "4", the user "3" receives the application necessary for the business "2", and the user "4" receives the application necessary for the businesses "3" and "4", respectively from the corresponding provider or providers. More specifically, the application AP-1 for the business "1" of the user "1" is supplied from the primary provider "1", and the application AP-4 for the business "4" of the user "2" is supplied from the intermediary provider "1". The application AP-2 for the business "2" of the user "3" is supplied from the primary provider "3", the application AP-3 for the business "3" of the user "4" is supplied from the primary provider "2" via the application providing unit 114 of the intermediary provider "2", and the application AP-4 for the business "4" of the user "4" is supplied from the intermediary provider "2".

The operation procedure from when a user requests the intermediary provider to provide applications to when services are provided by the application service providing system, is similar to the embodiments described above and is illustrated in the flow chart of Fig. 8. However, the operation at Step 456 changes whereat the application selecting units 103 and 116 compare the user requested function with the function of an application possessed by a provider. Namely it is necessary that the intermediary provider refers not only to its own application function list but also to the application function list possessed by the other intermediary provider in a linked state.

With the above-described configuration, the application service providing system is realized which allows a plurality of users to select a plurality of applications provided by a plurality of intermediary providers and realize systematic linkage between applications.

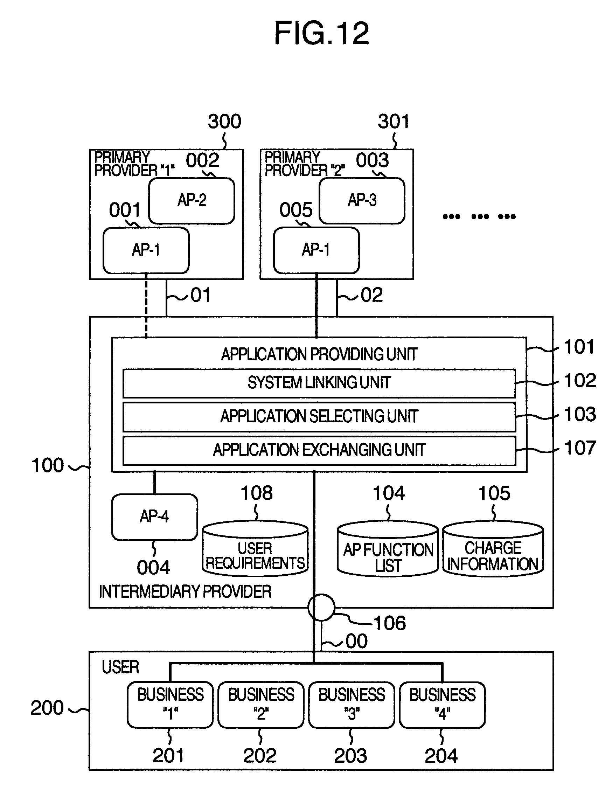

Fig. 12 is a diagram showing the structure of an application service providing system having an application exchanging function according to a sixth embodiment of the invention. In this system shown in Fig. 12, a provider side apparatus 100 has an application exchanging unit 107. The application exchanging unit 107 exchanges an application not satisfying the user requirements with another application which the apparatus can provide or another application provider can provide.

Programs for realizing the function of the application exchanging unit 107 of the provider side apparatus 100 are stored in a hard disk or the like of the provider side apparatus 100, and loaded on a memory to execute the programs. A storage medium for storing the programs may be other storage media different from a hard disk.

Fig. 12 shows the overall structure of the application service providing system of this embodiment. In this system, the intermediary provider side apparatus 100 having an application linking function like those shown in Fig. 7 and Figs. 9 to 11 exchanges an application 001 which cannot satisfy a service level designated by a user, with another application 005 which can satisfy the service level and is possessed by the apparatus 100 or another affiliated company, in order to retain the original service level requested by the user.

The intermediary provider side apparatus 100 has: its own application AP-4; an application providing unit 101 including the application exchanging unit 107; an application function list database 104 storing the function of each application; a charge information database 105 storing charge information of each user; a counter unit 106 for interface with users; and a user requirement database 108 storing the requirements of each user.

A user side apparatus 200 performs businesses "1" to "4". Of these businesses, services for the businesses "1" and "4" are entrusted to the intermediate provider. The business "1" is performed by an application AP-1 and the business "4" is performed by an application AP-4. Although the system having the intermediary provider such as shown in Fig. 7 and Figs. 9 to 11 is used, the application exchanging process is also applicable to the system without the intermediary provider such as shown in Fig. 1.

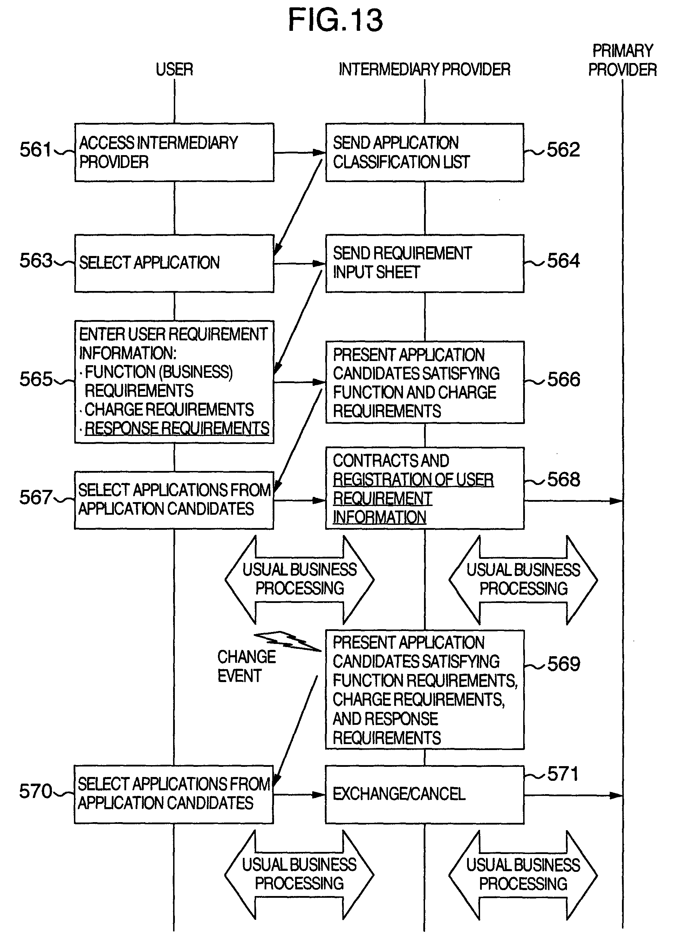

Fig. 13 is a flow chart illustrating the procedure of an application exchanging process to be executed by an application service providing system having an intermediary provider. This flow chart shown in Fig. 13 illustrates the operation that the application exchanging unit 107 of the system shown in Fig. 12 dynamically selects an application candidate optimum to a user to exchange it for an application previously contracted by a user for which a change event was issued. This change event occurs: when the response requirements become unsatisfactory because of an increase in the apparatus load or communication load, or other reasons; when the satisfaction degree of application function requirements changes because of version-up of application, a change in vendor partnership, or other reasons; or when there arises a possibility that the charge requirements are not satisfied.

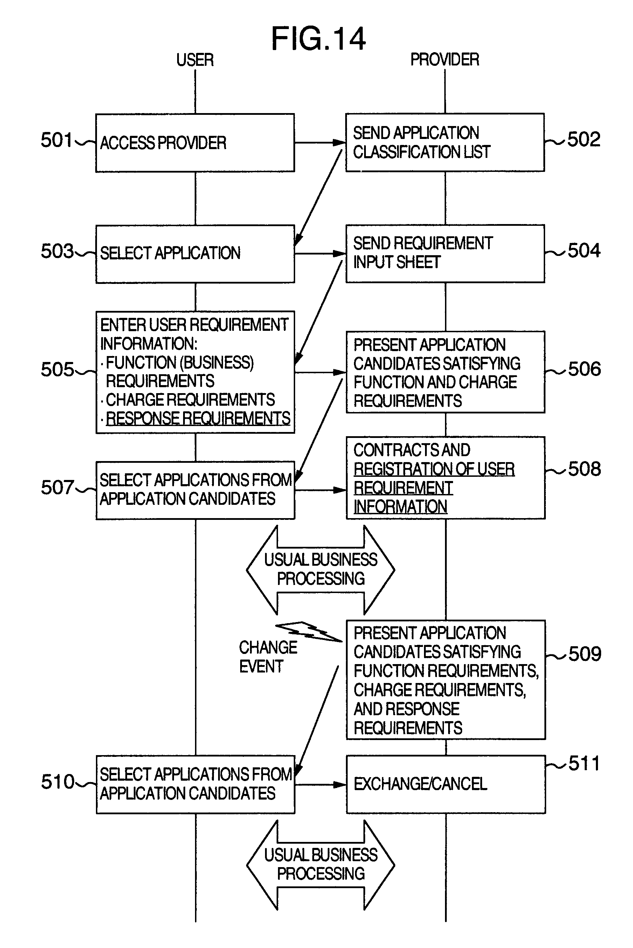

Fig. 14 is a flow chart illustrating the procedure of an application exchanging process to be executed by an application service providing system having no intermediary provider. This flow chart shown in Fig. 14 illustrates the operation that the application exchanging unit 107 of a system without the intermediary provider such as shown in Fig. 1 dynamically selects an application candidate optimum to a user to exchange it for an application previously contracted by a user. The different point of the flow chart shown in Fig. 14 from that shown in Fig. 13 is that a contract change work associated with an application exchanging operation at Step 511 is closed in the provider. In the following, the operation by the system having an intermediary provider will be described.

The response requirements include a maximum allowable search time and a maximum allowable renewal time respectively entered by a user. As the change event for the application exchanging operation, a system efficiency item (such as a past running performance) may be used in addition to the response requirements. Whether the response requirements are satisfied or not is judged by the application exchanging unit 107 by polling the server running the subject application. Polling may be executed periodically, randomly or the like. Instead of using the response at a specific instant, a change in past responses may be stored and in accordance with this information, the response time may be anticipated.

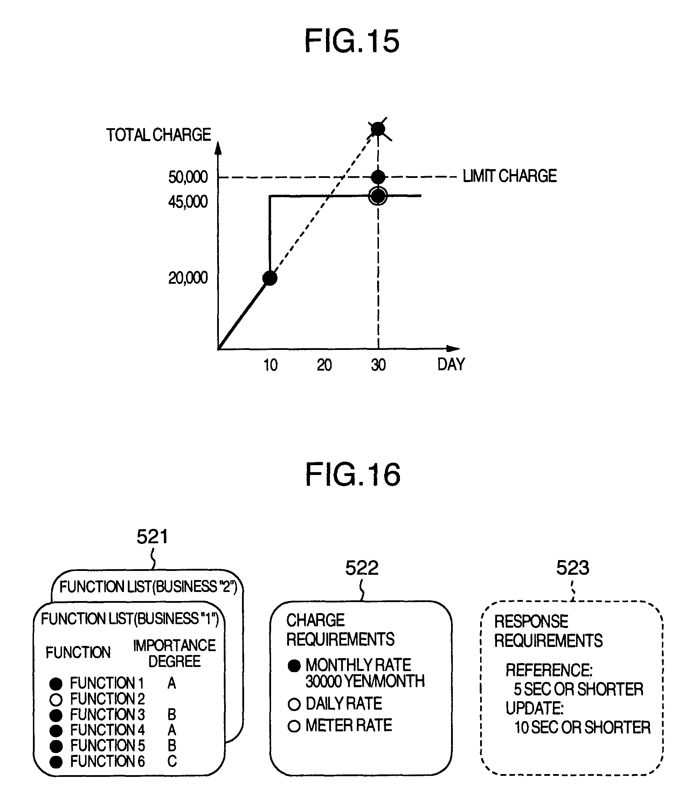

Fig. 15 is a graph illustrating an example of an application exchange in accordance with the charge information, according to the sixth embodiment. This graph shown in Fig. 15 illustrates one method according to which the application exchanging unit 107 judges whether the charge requirements are satisfied, by using the charge information database 1-5 storing the charge information of each user.

In this graph, a change in the charge during a predetermined period (in this example, up to 10-th day) is obtained from intermediate total charge data in the charge information database, and is extrapolated to estimate the total charge at a final time (in this example, 30-th day). If there is a possibility that the estimated total charge exceeds a limit charge set by a user, an application candidate which can satisfy the user request is searched and exchanged. More specifically, an application adopting a meter rate was used up to 10-th day and 20,000 Yen was charged. An application adopting a fixed charge of 25,000 Yen per month was used after 10th day. In this case, the total charge will be 45,000 on 30-th day and is lower than the limit charge of 50,000. A time interval when the application exchanging unit 107 judges the possibility that the total charge will exceed the limit charge at the final time, may be set as desired depending on various conditions.

Fig. 16 is a diagram showing examples of display windows for entering user requirement information. The processes from Step 561 to Step 568 shown in Fig. 13 are similar to those shown in Fig. 8. Different points reside in that at Step 565 response requirements 523 are entered as shown in Fig. 16 for preparation of a later dynamic exchange of an application, and that at Step 568 the intermediary provider stores requirement information entered by a user in the user requirement database 108.

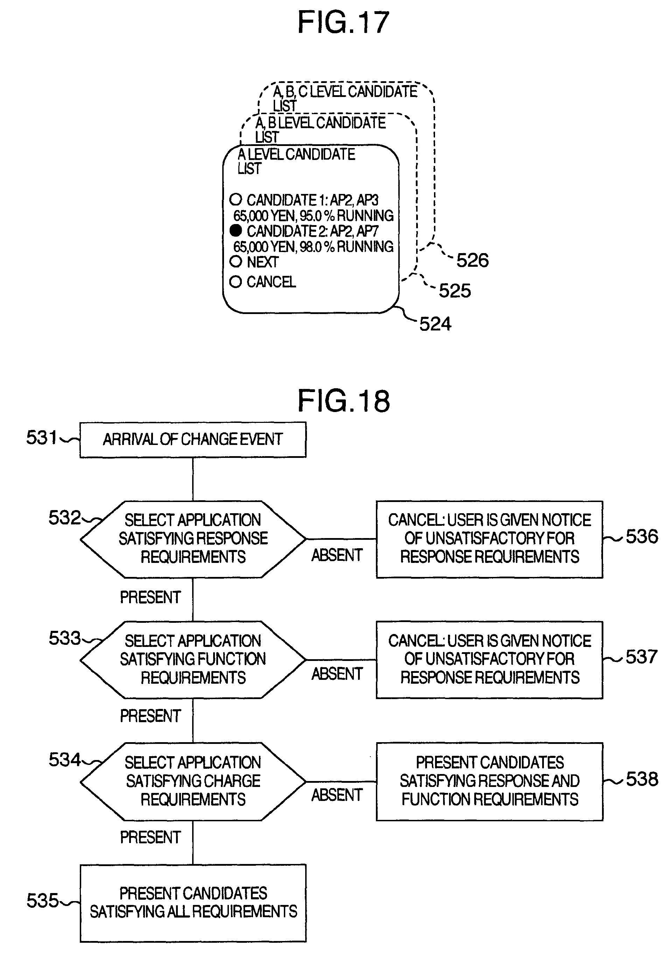

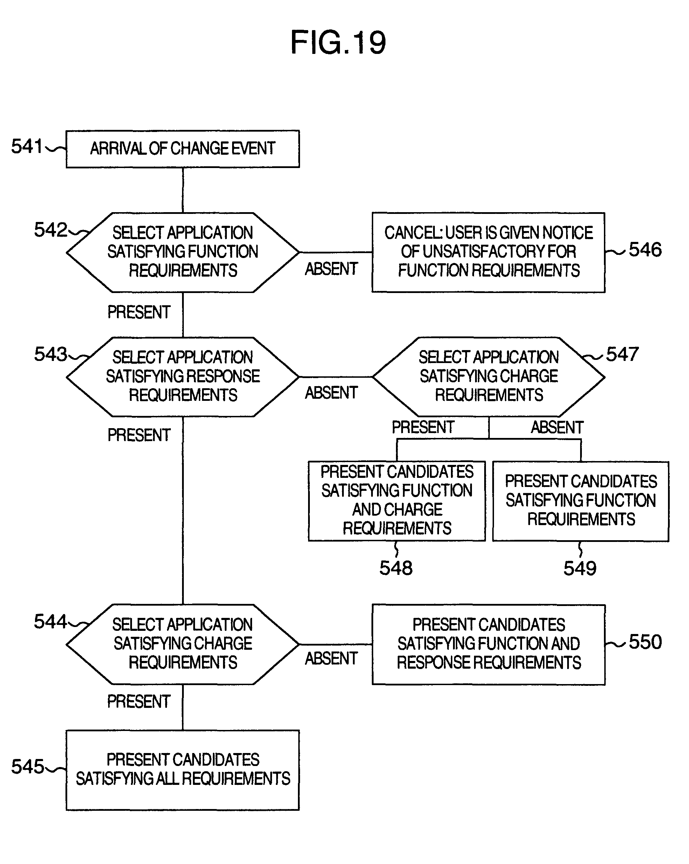

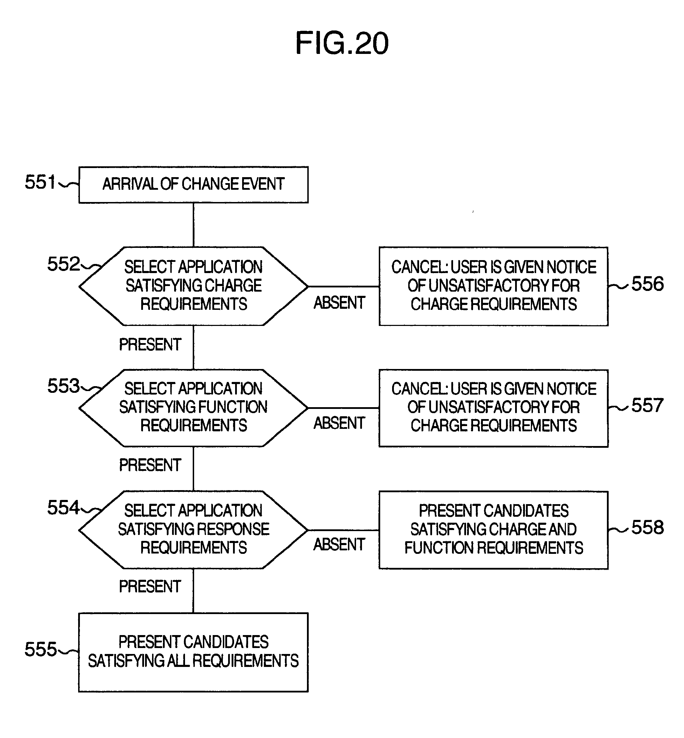

Steps 569 to 571 are newly added. These steps 569 to 571 will be described hereinafter. The application exchanging unit 107 searches application candidates in accordance with: an operation procedure illustrated in Fig. 18 when the response requirements 523 set by a user becomes unsatisfactory; an operation procedure illustrated in Fig. 19 when the satisfaction degree of the function requirements changes; or an operation procedure illustrated in Fig. 20 when the charge requirements becomes unsatisfactory. If the user did not enter the importance degrees, the user is supplied with application candidates or application providers and their application candidates satisfying all the functions requested by the user. If the user entered the importance degrees, the user is supplied with application candidates 524 to 526 satisfying the functions at all the importance degrees A, B and C, satisfying the functions only at the importance degrees A and B, and satisfying the functions only at the importance degree A, in accordance with the satisfaction degrees of the function at each importance degree (569).

Fig. 17 shows examples of display windows used when candidate lists are displayed, according to the sixth embodiment. Similar to the case of Fig. 6, instead of presenting the user with application candidates, a satisfaction degree of each function may be represented by a numerical value. In this case, if the user did not enter the importance degrees, only an application having the highest satisfaction degree of the function requested by the user is presented. If the user entered the importance degrees, only the application having the highest satisfaction degree of the function at the importance level A is automatically presented. When application candidates are presented to the user, additional information on the server which runs each application, such as a running factor, may also be presented. Furthermore, as a criterion index for linkage facility between applications, information may be presented as to whether the application providing unit 101 has adapters to applications to be linked.

When the exchange application candidate list is presented, the user selects an optimum application from the candidates by referring to the charge information, past running performance or the like (570). In this case, if exchange application candidates not satisfying the response requirements or charge requirements are presented, the user may select either the current state, i.e., cancel the candidates, in accordance with user preference.

Fig. 18 is a flow chart illustrating the procedure of an application exchanging process to be executed in accordance with the response requirements, according to the sixth embodiment. The flow chart of Fig. 18 illustrates the application exchanging process to be executed by the application exchanging unit 107 when the response requirements set by a user become unsatisfactory.

If it is judged that the response measured by the method described earlier does not satisfy the user response requirements, the application exchanging unit 107 starts the application exchanging operation (531). First, the application exchanging unit 107 acquires the response requirements stored in the user requirement database 108 and selects application candidates satisfying the response requirements (532). If there is no application satisfying the response requirements, the application is not exchanged, but a notice is given to the user to the effect that the response requirements cannot be satisfied (536).

If there is an application satisfying the response requirements, the application function requirements designated by the user when the contract was made, and stored in the user requirement database 108, are acquired and application candidates satisfying the requirements are selected in the manner described with Fig. 5 (533).

If there is no application satisfying the application function requirements, the application is not exchanged, but a notice is given to the user to the effect that the response requirements cannot be satisfied (537).

If there is an application satisfying the application function requirements, the charge requirements stored in the user requirement database 108 are acquired. The charge requirements are compared with the charge method and charge amount stored in the charge information database storing the charges information for each application, to thereby select application candidates satisfying the charge requirements (534). If there is no application satisfying the charge requirements, the application candidates satisfying the response requirements and application function requirements are presented to the user (538). If there is an application satisfying the charge requirements, the application candidate or candidates satisfying all the requirements are presented to the user (535).

Fig. 19 is a flow chart illustrating the procedure of an application exchanging process to be executed in accordance with the application function requirements, according to the sixth embodiment. The flow chart of Fig. 19 illustrates the application exchanging process to be executed by the application exchanging unit 107 when the application function requirements set by a user become unsatisfactory.

When the satisfaction degree of the application function requirements changes because of application version-up, a change in vender partnership or the like, the application exchanging unit 107 starts the application exchanging operation (541).

First, the application exchanging unit 107 acquires the application function requirements designated by the user when the contract was made, and stored in the user requirement database 108, and application candidates satisfying the requirements are selected in the manner described with Fig. 5 (542). If there is no application satisfying the application function requirements, the application is not exchanged, but a notice is given to the user to the effect that the application function requirements cannot be satisfied (546).

If there is an application candidate satisfying the application function requirements, the response requirements stored in the user requirement database 108 are acquired and application candidates satisfying the response requirements are selected (543).

If there is no application satisfying the response requirements, the charge requirements stored in the user requirement database 108 are acquired. The charge requirements are compared with the charge method and charge amount stored in the charge information database storing the charge information for each application, to thereby select application candidates satisfying the charge requirements (547). If there is no application satisfying the charge requirements, the application candidates satisfying the function requirements are presented to the user (549). If there is an application satisfying the charge requirements, the application candidate or candidates satisfying the function and charge requirements are presented to the user (548).

If there is an application satisfying the response requirements, the charge requirements stored in the user requirement database 108 are acquired. The charge requirements are compared with the charge method and charge amount stored in the charge information database storing the charge information for each application, to thereby select application candidates satisfying the charge requirements (544). If there is no application satisfying the charge requirements, the application candidates satisfying the function and response requirements are presented to the user (550). If there is an application satisfying the charge requirements, the application candidate or candidates satisfying all the requirements are presented to the user (545).

Fig. 20 is a flow chart illustrating the procedure of an application exchanging process to be executed in accordance with the charge requirements, according to the sixth embodiment. The flow chart of Fig. 20 illustrates the application exchanging process to be executed by the application exchanging unit 107 when the charge requirements set by a user become unsatisfactory.

If it is judged by the method illustrated with Fig. 15 that the charge requirements set by the user do not satisfy the charge requirements designated by the user, the application exchanging unit 107 starts the application exchanging operation (551).

First, the application exchanging unit 107 acquires the charge requirements stored in the user requirement database 108 are acquired. The charge requirements are compared with the charge method and charge amount stored in the charge information database storing the charge information for each application, to thereby select application candidates satisfying the charge requirements (552). If there is no application satisfying the charge requirements, the application is not exchanged but a user is given a notice to the effect that the charge requirements are not satisfied (556). If there is an application satisfying the charge requirements, the application function requirements stored in the user requirement database 108 and designated when the user made the contract, are acquired and application candidates satisfying the requirements are selected by the method described with Fig. 5 (553).

If there is no application satisfying the application function requirements, the application is not exchanged, but a notice is given to the user to the effect that the charge requirements cannot be satisfied (557). If there is an application satisfying the application function requirements, the response requirements stored in the user requirement database 108 are acquired and application candidates satisfying the response requirements are selected (554).

If there is no application candidate satisfying the response requirements, the application candidate or candidates satisfying the application function and charge requirements are presented to the user (558). If there is an application satisfying the response requirements, the application candidate or candidates satisfying all the requirements are presented to the user (555).

With the above-described configuration, an application service providing system can be realized which can exchange an application which cannot satisfy a service level designated by a user, with another application which can satisfy the service level and is possessed by the system apparatus itself or another affiliated company, in order to retain the original service level requested by the user.

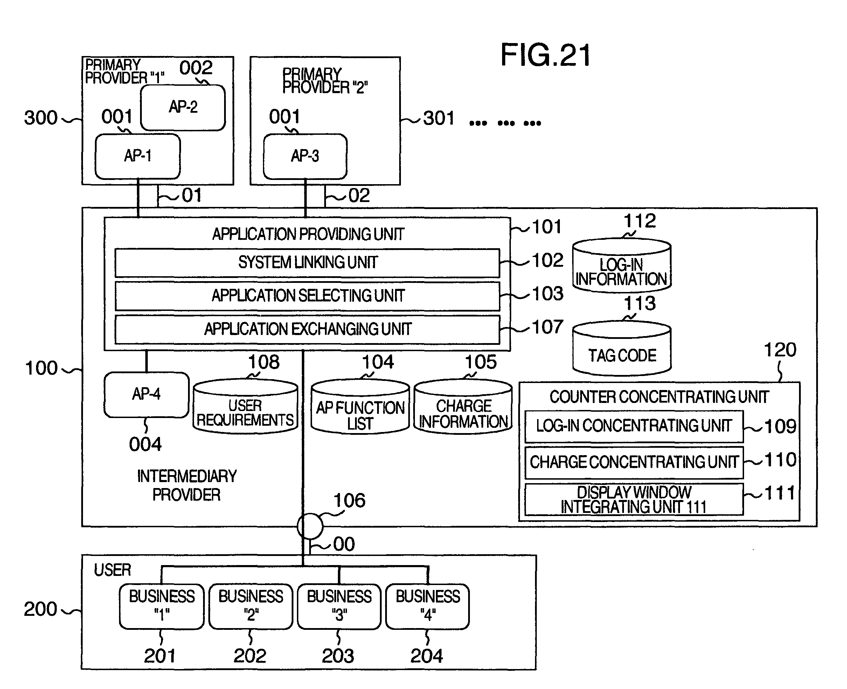

Fig. 21 is a diagram showing the structure of an application service providing system having a counter concentrating function according to a seventh embodiment of the invention. In this system shown in Fig. 21, a provider side apparatus 100 has a counter concentrating unit 120, a log-in concentrating unit 109, a charge concentration unit 110, and a display window integrating unit 111.

The counter concentrating unit 120 concentrates a counter relative to services for a plurality of applications. The log-in concentration unit 109 concentrates log-in relative to services for a plurality of applications.

The charge concentrating unit 110 concentrates a charge relative to services for a plurality of applications. The display window integrating unit 111 integrates a display window in accordance with dependency between display items of each application.

Programs for realizing the function of the counter concentrating unit 120, log-in concentrating unit 109, charge concentration unit 110, and display window integrating unit 111, respectively of the provider side apparatus 100, are stored in a hard disk or the like of the provider side apparatus 100, and loaded on a memory to execute the programs. A storage medium for storing the programs may be other storage media different from a hard disk.

Fig. 21 shows the overall structure of the application service providing system of this embodiment. In this system, the intermediary provider side apparatus 100 having an application linking function like those shown in Fig. 7 and Figs. 9 to 11 concentrates the log-in and charge and integrates the display window for a user side apparatus 200.

The intermediary provider side apparatus 100 has: its own application AP-4; an application providing unit 101; an application function list database 104 storing the function of each application; a charge information database 105 storing charge information of each user; a counter unit 106 for interface with users; a user requirement database 108; a counter unit 106; a log-in information database 112 storing log-in information of each user; a tag code database 113; the counter concentrating unit 120; the log-in concentrating unit 109; the charge concentration unit 110; and the display window integrating unit 111.

The user side apparatus 200 performs businesses "1" to "4". Of these businesses, services for the businesses "1", "3" and "4" are entrusted to the intermediate provider. The business "1" is performed by an application AP-1, the business "3" is performed by an application AP-3, and the business "4" is performed by an application AP-4.

A user can log in AP-1, AP-3 and AP-4 by logging in only the intermediary provider, because of the function of the log-in concentrating unit 109 of the counter concentrating unit 120. A user can concentrate the charges of AP-1, AP-3 and AP-4 to the intermediary provider side apparatus, because of the function of the charge concentrating unit 110 of the counter concentrating unit 120. A user can also view the display window with integrated dependent items between AP-1, AP-3 and AP-4 because of the function of the display window integrating unit 111. Although the system having the intermediary provider such as shown in Fig. 7 and Figs. 9 to 12 is used, the application exchanging process is also applicable to the system without the intermediary provider such as shown in Fig. 1.

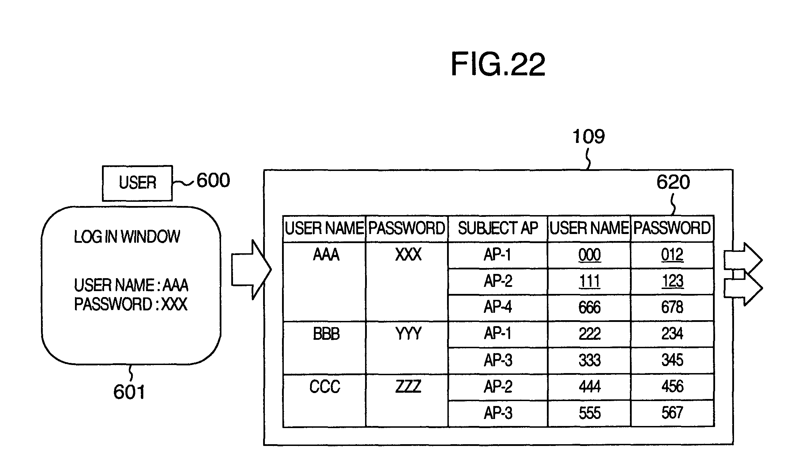

Fig. 22 is a diagram illustrating a use example of a log-in information table which manages log-in information of each user stored in the log-in information database 112. This diagram shown in Fig. 22 illustrates the operation to be executed by the log-in concentrating unit 109 shown in Fig. 21. The log-in information table 620 of the log-in information database 112 is a list of applications contracted with each user, and log-in names and passwords to the applications.

A user 600 enters a user name and a password on a display window 601. In response to a user input, the log-in concentrating unit 109 acquires the contents of the user log-in information table 620 from the log-in information database 112, searches applications contracted with the user 600 from a subject AP column, and confirms the user names and passwords of the searched applications. In this example, the user name "000" and password "012" for AP1 and the user name "111" and password "123" for AP2 are searched.

When applications are actually activated, the log-in concentrating unit 109 logs in by using the searched values. If the application is required to be exchanged and it becomes necessary to log in a new AP4 not registered in the log-in information database 112, a user name "666" and password "678" for the new application can be automatically generated.

With the above-described configuration, an application service providing system is realize which can concentrate and manage the log-in of each user.

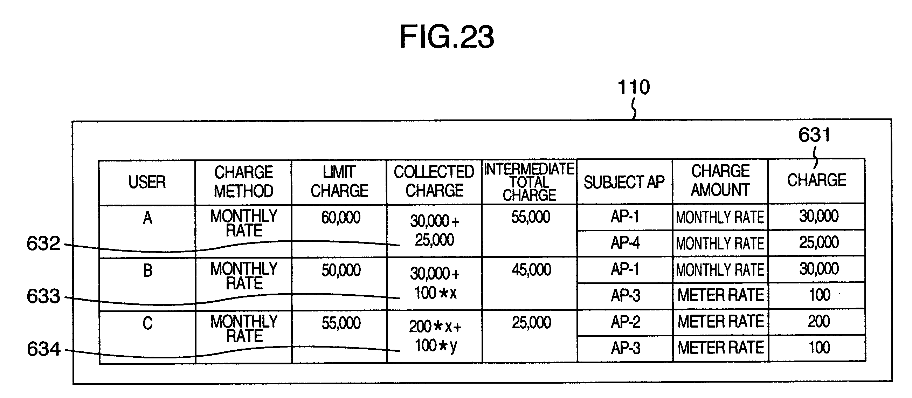

Fig. 23 is a diagram illustrating a use example of a charge information table which manages charge information of each user stored in a charge information database 105, according to the seventh embodiment. This diagram shown in Fig. 23 illustrates the operation to be executed by the charge concentrating unit 110 shown in Fig. 21. The charge information table 631 of the charge information database 105 is a list of a charge method, a limit charge, a collected charge, an intermediate total charge, a subject application, and its charge method and charge, respectively for each user.

If a user A uses AP1 with a fixed monthly rate of 30,000 Yen and AP4 with a fixed monthly rate of 25,000 Yen, the charge concentrating unit 110 charges the user A with a fixed monthly fee of 55,000 Yen (632). If a user B uses AP1 with a fixed monthly rate of 30,000 Yen and AP3 with a meter rate of 100 Yen per once, the charge concentrating unit 110 charges the user B with a total sum of a fixed monthly fee of 30,000 Yen for AP1 and a sum of charges for AP3 (633). If a user C uses AP2 with a meter rate of 200 Yen per once and AP3 with a meter rate of 100 Yen per once, the charge concentrating unit 110 charges the user C with a total monthly sum of charges for AP1 and AP3 (634). Instead of charging a user each month, the charge frequency of the charge concentrating unit 110 may set in various ways.

With the above-described configuration, an application service providing system is realize which can concentrate and manage the user charge counter to absorb different charge methods for respective applications.

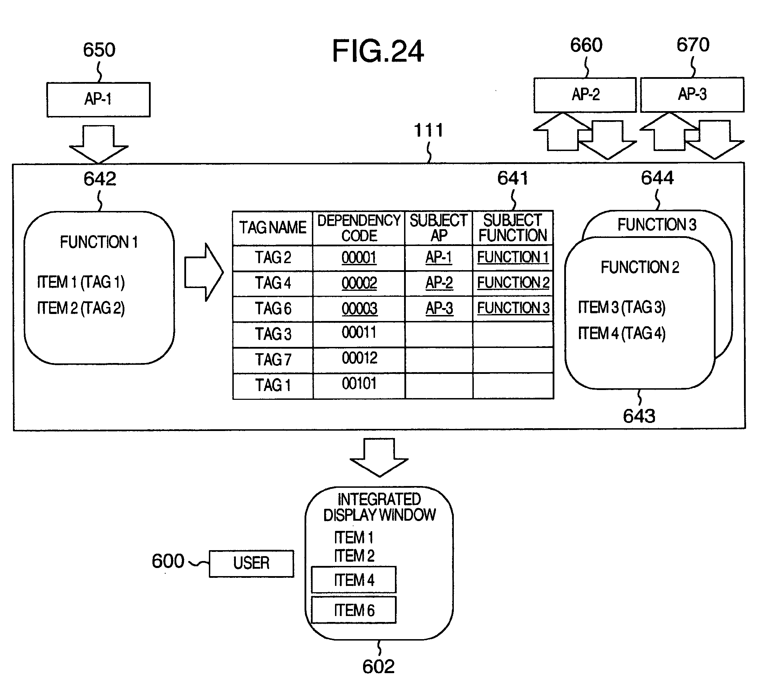

Fig. 24 is a diagram illustrating a use example of a tag code list which manages dependency between display items of applications, according to the seventh embodiment. This diagram shown in Fig. 24 illustrates the operation to be executed by the display window integrating unit 111 shown in Fig. 21. A tag code list table 641 in the tag code database 113 is constituted of a tag name given to each display window item, a dependency code represented by a numerical value indicating a dependency strength between tags, a subject application for a corresponding display window, and a subject function.

A user 600 uses a function 1 of a business 1 for AP-1 (650). The display screen integrating unit 111 receives the results 642 of the function 1 from AP-1, and acquires the tag code list table 641 from the tag code database 113 to search items dependent upon tags 1 and 2 contained in the results 642 of the function 1.

The dependence codes of the tag code list table 641 are assumed to have numerical numbers nearer to each other if the dependency between display items of applications is stronger.

In the example of the tag code list table 641, tags 2, 4 and 6 have strong dependency. Therefore, the function 2 for AP-2 (660) dependent to the tag 4 and the function 3 for AP-3 (670) dependent to the tag 6 are activated. The results 643 of the function 2 and the results 644 of the function 3 are integrated with the results 642 to present the user with a display window (602).

It is necessary for each application to give a tag for identifying the data item on the display window, in accordance with a common rule. If this common rule is obeyed, even if a new application is added, the display screen integrating unit 11 can automatically form a display window for the application by referring to the tag codes. Even if a user uses the application service providing system for various business flows, the display window integrating unit 111 can design the display window matching the user business flows, by referring to the tag codes.

With the above-described configuration, an application service providing system is provided which can integrate an input/output display window for different applications.

As described so far, in the application service providing system of the embodiments, services for applications are provided by selecting applications or application providers and their applications satisfying user requirements from a plurality of applications provided by an application provider or providers. Accordingly, services for applications requested by a user can be efficiently provided.

In the application service providing system of the embodiments, an application not satisfying the user requirements is exchanged with another application provided by its own provider or other application providers. Accordingly, services for applications can be provided while the service level requested by a user can be retained.

In the application service providing system of the embodiments, the counter of services for a plurality of applications can be concentrated. It is therefore possible to reduce a burden of a user using a plurality of applications.

According to the invention, services for applications are provided by selecting applications or application providers and their applications satisfying user requirements from a plurality of applications provided by an application provider or providers. Accordingly, services for applications requested by a user can be efficiently provided.

## Claims

1. An application service providing method of providing a user with application services, the method comprising the steps of:
selecting applications satisfying user requirements from a plurality of applications; and
providing application services by performing data format conversion between data input by the user and data for the selected applications or communication protocol conversion.

2. An application service providing method according to claim 1, wherein the user requirements are application function requirements indicating a function of an application requested by the user, charge requirements indicating a limit charge amount payable by the user, or response requirements indicating a response of an application requested by the user.

3. An application service providing method according to claim 1, further comprising a step of exchanging an application not satisfying the user requirements with another application.

4. An application service providing method according to claim 1, further comprising a step of concentrating a counter of services for a plurality of applications.

5. An application service providing system for providing a user with application services, the system comprising:
application selecting means (103) for selecting applications satisfying user requirements from a plurality of applications; and
system linking means (102) for providing application services by performing data format conversion between data input by the user and data for the selected applications or communication protocol conversion.

6. An application service providing system according to claim 5, further comprising application exchanging means (107) for exchanging an application not satisfying the user requirements with another application.

7. An application service providing system according to claim 5, further comprising counter concentrating means (120) for concentrating a counter of services for a plurality of applications.

8. A computer readable storage medium storing a program for realizing on a computer an application service providing system for providing a user with application services, the program comprising instructions for performing the steps of:
selecting applications satisfying user requirements from a plurality of applications; and
providing application services by performing data format conversion between data input by the user and data for the selected applications or communication protocol conversion.

9. A computer readable storage medium according to claim 8, wherein the program further comprises instructions for performing a step of exchanging an application not satisfying the user requirements with another application.

10. A computer readable storage medium according to claim 8, wherein the program further comprises instructions for performing a step of concentrating a counter of services for a plurality of applications.

11. An application service providing method of providing a user with application services, the method comprising the steps of:
selecting applications or application providers and their applications satisfying user requirements from a plurality of applications provided by a application provider or providers; and
providing application services by performing data format conversion, communication protocol conversion, or work flow management between the selected applications.

12. An application service providing system for providing a user with application services, the system comprising:
means (103) for selecting applications or application providers and their applications satisfying user requirements from a plurality of applications provided by a application provider or providers; and
means (101) for providing application services by performing data format conversion, communication protocol conversion, or work flow management between the selected applications.
